(19)

Europäisches
Patentamt
European
Patent Office
Office européen
des brevets

(11)　EP 3 971 663 B1

(12)　　**EUROPEAN PATENT SPECIFICATION**

(45) Date of publication and mention
of the grant of the patent:
**30.04.2025　Bulletin 2025/18**

(21) Application number: **21162165.1**

(22) Date of filing: **11.03.2021**

(51) International Patent Classification (IPC):
**G05B 19/18** (2006.01)　　　**G05B 13/02** (2006.01)
**G05B 19/418** (2006.01)

(52) Cooperative Patent Classification (CPC):
**G05B 19/18;** G05B 13/0265; G05B 19/41875;
G05B 2219/33025; G05B 2219/33036;
G05B 2219/49065; Y02P 80/10; Y02P 90/02

(54) **SYSTEM AND METHOD FOR PERFORMING TREE-BASED MULTIMODAL REGRESSION**

SYSTEM UND VERFAHREN ZUR DURCHFÜHRUNG VON BAUMBASIERTER MULTIMODALER REGRESSION

SYSTÈME ET PROCÉDÉ PERMETTANT D'EFFECTUER UNE RÉGRESSION MULTIMODALE DE TYPE ARBRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:　**18.09.2020　US 202063080558 P
18.12.2020　US 202017127778**

(43) Date of publication of application:
**23.03.2022　Bulletin 2022/12**

(73) Proprietor: **Samsung Display Co., Ltd.
Yongin-si, Gyeonggi-do 17113 (KR)**

(72) Inventor: **LEE, Janghwan
Pleasanton, CA 94588 (US)**

(74) Representative: **Marks & Clerk LLP
15 Fetter Lane
London EC4A 1BW (GB)**

(56) References cited:
**WO-A1-2019/091551　　WO-A1-2020/003114
US-A1- 2019 304 849**

EP 3 971 663 B1

## Description

FIELD

One or more aspects of embodiments according to the present disclosure relate machine learning systems, and more particularly to predicting a manufacturing defect level via a tree structured multimodal regressor.

BACKGROUND

The mobile display industry has grown rapidly in recent years. As new types of display panel modules and production methods are deployed, and as product specifications tighten, it may be desirable to enhance equipment and quality-control methods to maintain production quality. For example, it may be desirable to have measures for detecting different levels of manufacturing defects. Accordingly, what is desired is a system and method for automatically predicting levels of manufacturing defects for making adjustments to the manufacturing process.

The above information disclosed in this Background section is only for enhancement of understanding of the background of the present disclosure, and therefore, it may contain information that does not form prior art.

International Patent Application Publication WO2020/003114A1 describes a method for predicting the presence of product defects during an intermediate processing step of a thin product wound in a roll, which provides for - receiving a roll of thin product that has been assigned a unique identification code stored in a database system, this latter containing process and/or product parameters detected in the production steps of said thin product wound in said roll upstream of said intermediate processing step, associated with said unique identification code, - accessing said database system, - entering one or more of the process and/or product parameters associated with the unique identification code of said roll contained in said database system in a predictive model, which uses a correlation, created by means of machine learning logics, from historicized values related to the process and/or product parameters output from said intermediate processing step and historicized values related to process and/or product parameters of the same rolls detected in the production steps of said rolls upstream of said intermediate processing step, in order to predict product parameters output from said intermediate processing step, - comparing said aforesaid product parameters with respective predefined limit values, - generating predictive diagnosis information of thin product defects based on the result of said comparison.

United States Patent Application Publication US2019/304849A1 describes a method, comprising: obtaining and validating historical input data from wafer acceptance testing, circuit probe testing, and final testing for one or more previous production runs for making a plurality of semiconductor chips; detecting one or more anomalies in the historical input data; identifying one or more features of interest based on the detection of anomalies; training at least one model using the historical input data as a training dataset, the model configured to determine from a set of input data whether any of the plurality of semiconductor chips have detected anomalies in the features of interest and should be subjected to further testing; deploying the at least one model to evaluate current input data from wafer acceptance testing, circuit probe testing, and final testing for a current production run; and predicting, by the trained model using the current input data, for every chip in the current production run, whether the chip will exhibit an anomaly in a feature of interest that exceeds a defined threshold for acceptability in the feature of interest, and therefore should be subject to further testing.

SUMMARY

An embodiment of the present disclosure is directed to a method for making predictions relating to products manufactured via a manufacturing process. A processor receives input data and makes a first prediction based on the input data. The processor identifies a first machine learning model from a plurality of machine learning models based on the first prediction. The processor further makes a second prediction based on the input data and the first machine learning model, and transmits a signal to adjust the manufacturing of the products based on the second prediction. The method may be a process-implemented method, where the processor may be a processor of a computer. In this way, the method may also be a computer-implemented method.

According to one embodiment, the input data includes multivariate sensor data from a plurality of sensors.

According to one embodiment, the first machine learning model is associated with a first normal distribution associated with a first manufacturing condition, and a second machine learning model of the plurality of machine learning models is associated with a second normal distribution associated with a second normal distribution associated with a second manufacturing condition.

According to one embodiment, the second prediction is a prediction of a defect level associated with the products.

According to one embodiment, the processor generates the plurality of machine learning models including: applying a first baseline machine learning model to a training dataset; engaging in an error analysis process in response to applying the first baseline machine learning model, wherein the error analysis process identifies a first portion of the training dataset that is within a threshold range of error, and a second portion of the training dataset that is outside of the threshold range of error; labeling the first portion of the training dataset with a first label; and engaging in the error analysis process with a new baseline machine learning model for the second portion of the training dataset.

According to one embodiment, the error analysis process is executed a certain number of times based on a preset number of labels.

According to one embodiment, a different label is assigned in each execution of the error analysis process, to data in the training dataset that is within the threshold range of error.

According to one embodiment, the first prediction includes a predicted label, and the method for making predictions relating to products manufactured via a manufacturing process further comprises training a classifier based on the training dataset and labels generated by the error analysis process, wherein making the first prediction includes applying the classifier to the input data.

According to one embodiment, the method further comprises augmenting the input data with additional data, wherein the additional data is based on statistical information on data generated at a prior time period.

According to one embodiment, at least one of temperature or operating speed of a manufacturing equipment is adjusted in response to the signal.

An embodiment of the present disclosure is also directed to a system for making predictions relating to products manufactured via a manufacturing process. The system includes a processor and a memory. The memory includes instructions that, when executed by the processor, cause the processor to: receive input data; make a first prediction based on the input data; identify a first machine learning model from a plurality of machine learning models based on the first prediction; make a second prediction based on the input data and the first machine learning model; and transmit a signal to adjust the manufacturing of the products based on the second prediction.

As a person of skill in the art should recognize, the claimed system and method for making predictions relating to products manufactured via a manufacturing process help address changing manufacturing conditions that may result in changing relationships between input data and the predictions, while controlling model complexity and computation power in making predictions with desired accuracies.

These and other features, aspects and advantages of the embodiments of the present disclosure will be more fully understood when considered with respect to the following detailed description, appended claims, and accompanying drawings. Of course, the actual scope of the invention is defined by the appended claims.

At least some of the above features that accord with the invention, and other features according to the invention, are set out in the claims.

## BRIEF DESCRIPTION OF THE DRAWINGS

Non-limiting and non-exhaustive embodiments of the present disclosure are described with reference to the following figures, wherein like reference numerals refer to like parts throughout the various views unless otherwise specified, and in which:

FIG. 1 is a block diagram of a system for making predictions relating to products manufactured via a manufacturing process according to one embodiment;
FIG. 2 is a block diagram of an inference module according to one embodiment;
FIG. 3A is a flow diagram of a process executed by a training module for generating a plurality of machine learning models according to one embodiment;
FIG. 3B are regressors generated upon execution of the flow diagram of FIG. 3A;
FIG. 4 is a more detailed flow diagram of a process for training a classifier engine according to one embodiment; and
FIG. 5 is a flow diagram of a process executed by a data augmentation module for augmenting collected trace data $X$ during an inference stage according to one embodiment.

## DETAILED DESCRIPTION

Hereinafter, embodiments will be described in more detail with reference to the accompanying drawings, in which like reference numbers refer to like elements throughout. The present disclosure, however, may be embodied in various different forms, and should not be construed as being limited to only the illustrated embodiments herein. Rather, these embodiments are provided for illustrative purposes so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described. Unless otherwise noted, like reference numerals denote like elements throughout the attached drawings and the written description, and thus, descriptions thereof may not be repeated. Further, in the drawings, the relative sizes of elements, layers, and regions may be exaggerated and/or simplified for clarity.

A manufacturing process, such as a mobile display manufacturing process, may acquire digital trace data during the manufacture of the mobile display product. Although a mobile display product is used, a person of skill in the art should recognize that embodiments of the present disclosure may apply to manufacturing processes of other glass and non-glass products, including for example, the manufacturing of semiconductor wafer, display glass, Poly Imide substrate, and/or the like.

Trace data may be collected via one or more sensors that may be placed, for example, on top of a conveyer belt that carries the product during production. The sensors may be configured to record a sensed activity as trace data. The sensors may be, for example, multiple temperature and pressure sensors configured to capture measurements of temperature and pressure in the manufacturing process, as a function of time. Each sensor may be sampled multiple times (e.g., every second or a few seconds for monitoring each glass, over a period of multiple glass manufacturing time).

Trace data may be analyzed to understand conditions that lead to certain manufacturing defects. As manufacturing conditions change over time, the collected trace data, and relationships of the trace data to manufacturing defects, may also change. When machine learning is used to predict manufacturing defects based on input trace data, a model that is trained based on a previously understood relationship may no longer function to accurately predict defects if the relationship between trace data and manufacturing defects has changed due to changes in manufacturing conditions. Accordingly, it is desirable to have a system and method that uses machine learning to make predictions of manufacturing defects, where the system and method also takes into account different/changing relationships between the trace data and the manufacturing defects in making the predictions.

In general terms, embodiments of the present disclosure are directed to analyzing trace data of a manufacturing process for predicting a degree/level of defect (also referred to as defect visibility level) of the manufacturing process. A defective manufacturing process may result in a defective/faulty manufacturing part. Identifying potential defects of the manufacturing process may help improve quality control of the process, reduce manufacturing costs, and/or improve equipment uptime.

In one embodiment, the trace data is generated by one or more sensors over time. The trace data is provided to an analysis system for predicting a defect visibility level. In one embodiment, the input trace data is provided by a plurality of the sensors as multivariate input data. The input trace data may be augmented using statistical information of previously obtained trace data, and the augmented data may be provided to a classifier for selecting a machine learning model (e.g. a regression model) from a plurality of models. The selected machine learning model may depend on a class label assigned by the classifier to the augmented data.

In one embodiment, the analysis system addresses varying manufacturing conditions that may result over time, which may create multiple single distributions (also referred to as multimodal distributions) of the input data (e.g. trace data) to the output data (e.g. defect visibility levels). In one embodiment, the analysis system provides a tree-structured multimodal regressor design to help address the multimodal distributions of the data. In this regard, the analysis system may provide a plurality of machine learning models, where a first model is associated with a first modality (e.g. a first normal distribution) that may be identified by a first class label, and a second model is associated with a second modality (e.g. a second normal distribution) different from the first modality, that may be identified by a second class label. In one embodiment, the classifier selects one of the plurality of machine learning models based on the class label that is predicted for the augmented input data. Experiments show that the tree-structured multimodal regressor design that uses a plurality of regressors for predicting defect levels achieves a higher prediction accuracy than a model that uses a single regressor.

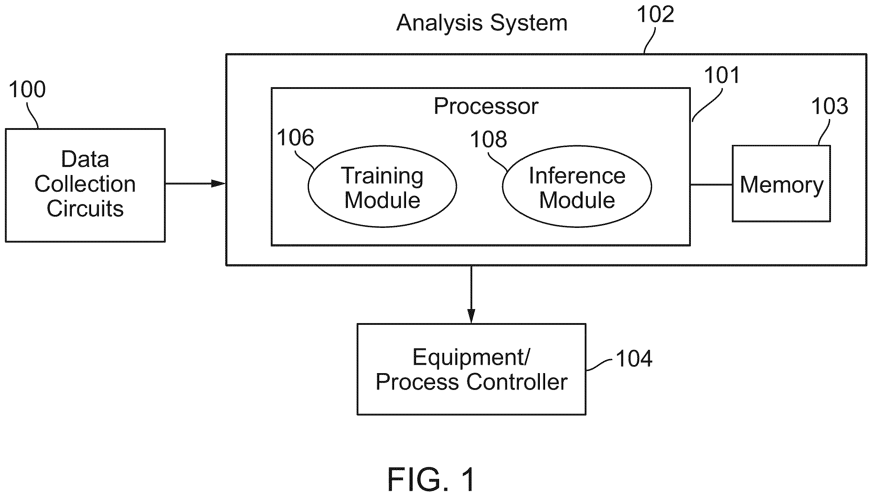

FIG. 1 is a block diagram of a system for making predictions relating to products manufactured via a manufacturing process according to one embodiment. The system includes one or more data collection circuits 100, an analysis system 102, and one or more equipment/process controllers 104. The data collection circuits 100 may include, for example, sensors, amplifiers, and/or analog to digital converters, configured to collect trace data during a manufacturing process. The sensors may be placed, for example, on top of a conveyer belt that carries a product during production. The sensors may be configured to record any sensed activity as trace data. For example, the sensors may include multiple temperature and pressure sensors configured to capture measurements of temperature and pressure in the manufacturing process, as a function of time. Each sensor may be sampled multiple times (e.g., every second or a few seconds for monitoring each glass, over a period of multiple glass manufacturing time).

The analysis system 102 may include a training module 106 and an inference module 108. Although the training and inference modules 106, 108 are illustrated as separate functional units in FIG. 1, a person of skill in the art will recognize that the functionality of the modules may be combined or integrated into a single module, or further subdivided into further sub-modules without departing from the scope of the inventive concept. For example, in some implementations, the training module 106 corresponds to one or more processing units (also referred to as a processor) 101 and associated memory 103. The inference module 108 may correspond to the same one or more processing units as the training module 106 or to a different one or more processing units. Such processing units include a central processor unit (CPU), a graphics processor unit (GPU), an application specific integrated circuit (ASIC), a field programmable gate array (FPGA), etc.

The training module 106 may be configured to generate and train a plurality of machine learning models for use by the inference module 108. The plurality of machine learning models may be generated and trained based on training data provided by the data collection circuits 100. In one embodiment, the training module 106 uses a tree-structured multimodal regressor design in generating and training the plurality of machine learning models.

The training module 106 may also be configured to train a classifier to select one of the plurality of machine learning models. In this regard, the plurality of machine learning models may be associated with different class labels. In one embodiment, the classifier is trained to learn a relationship between trace data and the class labels, to identify an appropriate machine learning model to use during an inference stage.

The inference module 108 may be configured to predict a defect visibility level based on trace data provided by the data collection circuits 100 during the inference stage. In this regard, the inference module 108 may select a model from the plurality of trained machine learning models to make the prediction. The selection of the model may depend on the classification of the received trace data. Different machine learning models may be invoked based on different classifications.

In one embodiment, the predicted defect visibility level is used for making an adjustment in the manufacturing process. For example, if the predicted defect visibility level is above a certain threshold level, a signal may be transmitted to the equipment/ process controller 104 for adjusting a parameter of a manufacturing equipment used for the manufacturing process. The adjusted parameter may be, for example, an operating speed or internal temperature of the manufacturing equipment. In one embodiment, the manufacturing equipment may be re-initialized, or re-calibrated, in response to detecting that the predicted defect visibility level is above the certain threshold level.

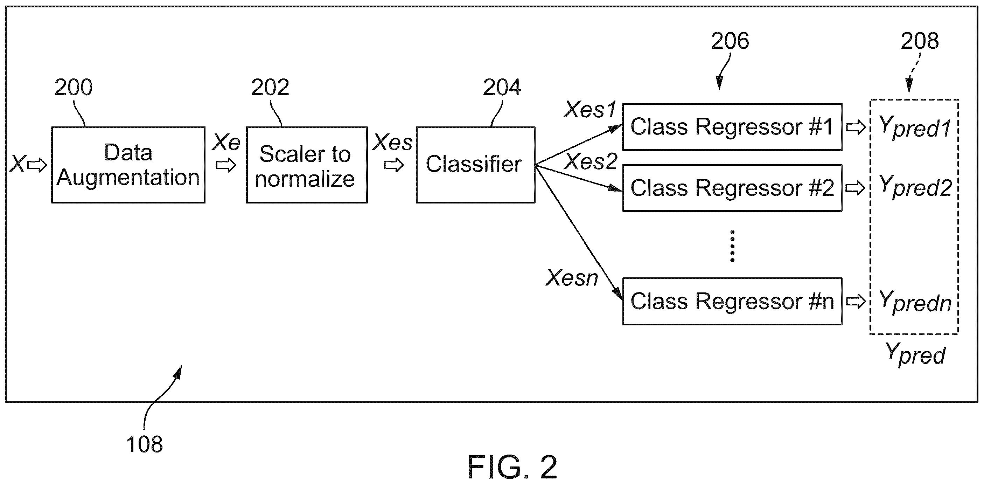

FIG. 2 is a block diagram of the inference module 108 according to one embodiment. In one embodiment, the inference module 108 includes a data augmentation module 200, a scaling module 202, a classifier engine 204, and a plurality of machine learning models 206 (also referred to as class regressors).

In one embodiment, trace data X is collected from the various sensors by the data collection circuits 100. The trace data X is provided to the data augmentation module 200 as multivariate input data. The data augmentation module 200 may take the multivariate trace data and augment the trace data with statistical data. The statistical data may be, for example, a mean value computed from prior samples collected by the data collection circuits 100. The mean value may be concatenated to the collected trace data to produce an augmented dataset *Xe.*

In one embodiment, the augmented dataset Xe may be further processed by the scaling module 202. Because the range of values provided by the various sensors may vary widely depending on the type of sensor, the scaling module 202 may be configured to apply feature scaling/normalization to the augmented dataset Xe to produce a normalized dataset *Xes.* Data normalization may be achieved via a feature standardization algorithm, min-max normalization, or the like. The normalized dataset *Xes* may then be fed to the classifier 204, also called a classifier engine 204.

The classifier engine 204 may be configured to run a machine learning algorithm such as, for example, random forest, extreme gradient boosting (XGBoost), support-vector machine (SVM), deep neural network (DNN), and/or the like. In one embodiment, the classifier engine 204 is trained to predict a class label for the input data. In this regard, the classifier engine 204 may predict a class label, Xes1, Xes2, ..., Xesn, from a plurality of preset class labels. The predicted class label may then be used to select a machine learning model, Class Regressor #1, Class Regressor #2, ..., Class Regressor #n, from the plurality of machine learning models 206. The selected machine learning model generates a prediction of a defect visibility level 208, Ypred1, Ypred2, ..., Ypredn, of a product manufactured via the manufacturing process.

In one embodiment, each machine learning model, Class Regressor #1, Class Regressor #2, ..., Class Regressor #n, of the plurality of machine learning models 206 is associated with a different modality. Each modality may reflect certain manufacturing conditions that result in a particular distribution of trace data X to predicted defect visibility levels, Ypred1, Ypred2, ... Ypredn. The use of multimodal machine learning models 206 for predicting defect visibility levels, Ypred1, Ypred2, ... Ypredn, may allow the analysis system to address changes in manufacturing conditions while providing a desired level of prediction accuracy. The use of multimodal machine learning models 206 may also help control model complexity and save computation power when compared to a system that uses a single model for making the predictions.

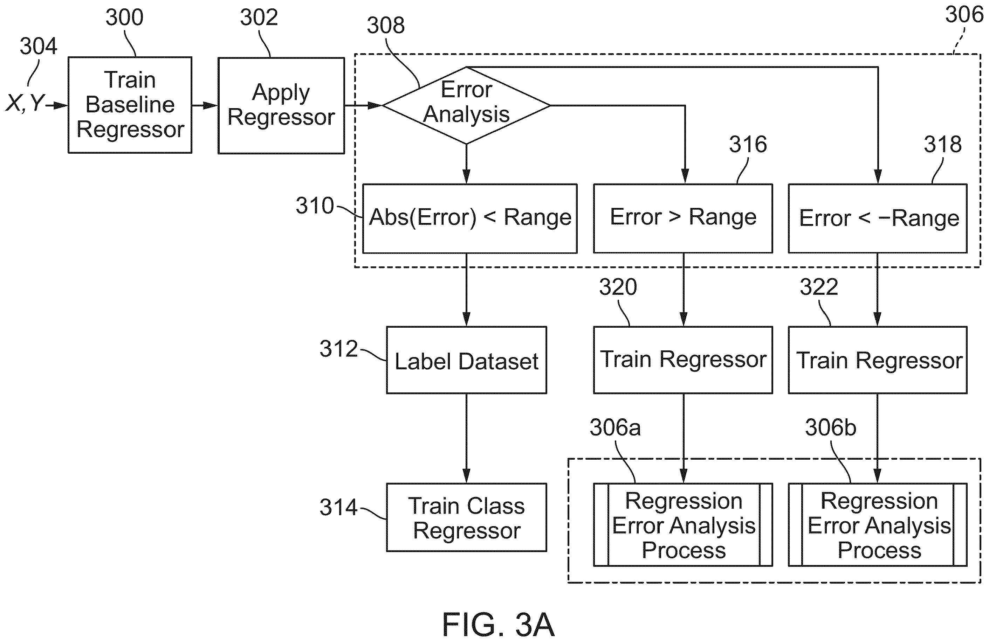

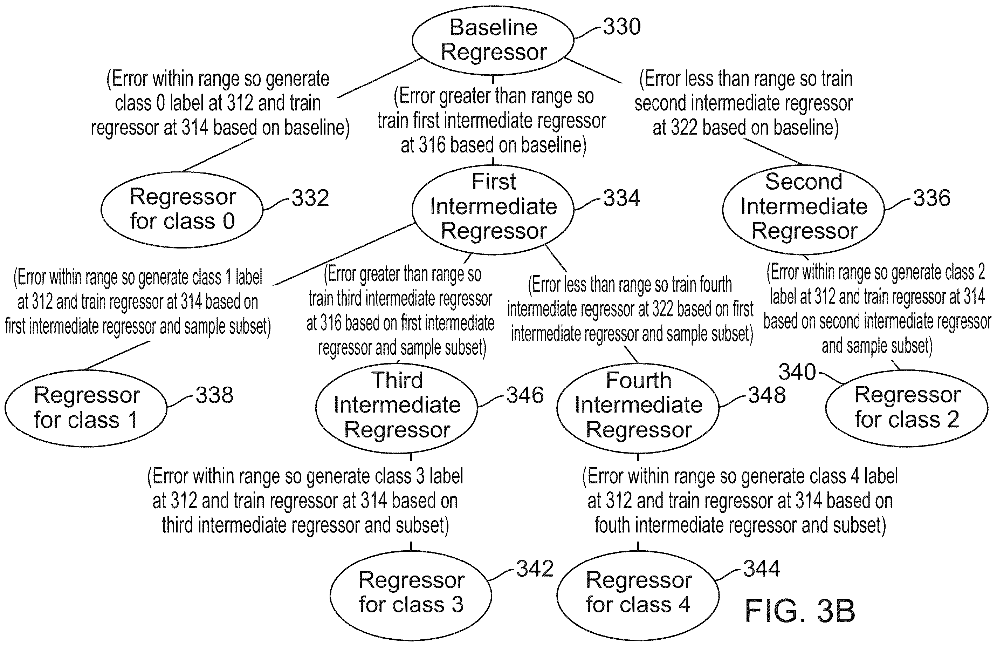

FIG. 3A is a flow diagram of a process executed by the training module 106 for generating the plurality of machine learning models 206 according to one embodiment. It should be understood that the sequence of steps of the process is not fixed, but can be modified, changed in order, performed differently, performed sequentially, concurrently, or simultaneously, or altered into any desired sequence, as recognized by a person of skill in the art. FIG. 3B are regressors generated upon execution of the flow diagram of FIG. 3A.

At block 300, the training module 106 builds a baseline regressor 330, and, at block 302, the training module 106 applies the baseline regressor 330 to an input training dataset 304 for predicting a defect visibility level. The baseline regressor 330 may be any machine learning model that may be simple to set up, such as, for example, a linear regression model. In one embodiment, the baseline regressor 330 is built using all training data to identify the major distribution of the input training dataset 304. The input training dataset 304 may include trace data (X) and related defect visibility levels (Y).

At block 306, the training module 106 iteratively engages in the error analysis process for identifying a subset of the input training dataset 304 that is within a threshold range of error. The error may be a value indicative of a difference between the predicted defect visibility level and the defect visibility level provided in the training dataset 304 as ground truth. In this regard, at block 308, the training module 106 engages in an error analysis inquiry for determining whether the prediction by the baseline regressor 330 at block 302 for a first subset of the input training dataset 304 is within or outside the threshold range of error when compared to the ground truth visibility level. If the first subset of the input training dataset 304 is within the threshold range of error, such subset is identified at block 310. For instance, if the absolute error is less than a positive threshold value, such a subset is identified at block 310.

At block 312, the training module 106 labels the identified first subset with a class label. The class labels may be, for example, automatically generated numbers (e.g. sequential numbers). For example, the first generated class label may be class "0," and the applied baseline regressor 330 may be set as a regressor 332 for class 0. At block 314, the training module 106 trains the classifier 204 using one or more machine learning models, for learning the relationship between the identified first subset and the assigned class label.

Referring again at block 308, if any second subset of the input training dataset 304 is outside of the threshold range of error (e.g. greater than the positive threshold value as identified at block 316, or less than a negative threshold value as identified at block 318, although other values are also possible), such second subset is identified at the appropriate block 316 or 318. At block 320 or 322, the training module 106 proceeds to build and train a new baseline regressor (e.g. first intermediate regressor 334), and engages in the error analysis process again at block 306a or 306b, upon applying the new baseline regressor to the second subset. If, by running the error analysis process 306a, 306b, it is determined that the new baseline regressor is within the threshold range of error, the second subset is labeled with a new class label in block 312. For example, the class label for the second subset may be class "1", and the applied first intermediate regressor 334 may be set as a regressor 338 for class 1.

In one embodiment, the error analysis process 306a, 306b repeats until all data in the input training dataset 304 is within the threshold range of error, or until a maximum depth value has been reached. The maximum depth value may be based on a preset number of class labels identified by the training module 306. For example, if the preset number of class labels is five (classes 0-4), the error analysis process repeats a maximum of five times for identifying a maximum number of five regressors (e.g. regressors 332, 338, 340, 342, and 344) and associated subset of datasets for each of the classes. According to one embodiment, if after the last repetition there is still data in the input training dataset 304 that is outside the threshold range of error, the remaining data may be merged with data in a prior repetition, and assigned the class label of the prior repetition.

In one embodiment, the process executed by the training module 106 for generating the plurality of machine learning models 206 may be described as a tree algorithm that iteratively segments the input training dataset 304 and, depending on the error analysis, either labels the segmented dataset with a label (by traversing to a left sub-branch of the tree), or applies one or more new intermediate baseline regressors (e.g. intermediate regressors 334 or 336 during a first iteration of the process, or intermediate regressors 346 or 348 during a second iteration of the process) to perform the error analysis again (by traversing to right sub-branches of the tree). In one embodiment, the depth of the tree may be limited (e.g. to be the total number of class labels determined by the training module 106) for limiting implementation complexity.

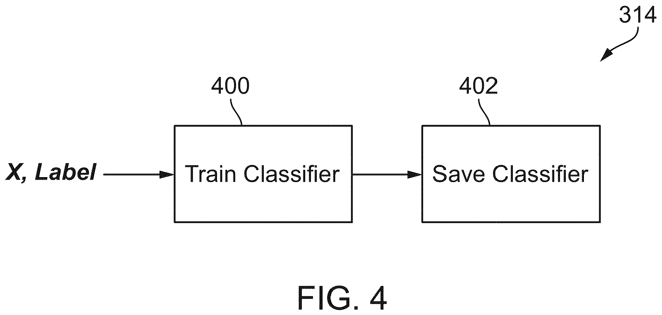

FIG. 4 is a more detailed flow diagram of block 314 for training the classifier engine 204 according to one embodiment. The classifier engine 204 may be ready for training after the input training dataset 304 has been labeled with corresponding class labels. In this regard, at block 400, input data including training trace data (X) and associated labels, is used for training the classifier engine 204 to learn the relationship between the trace data and the associated labels. The training may be done via a supervised machine learning algorithm such as, for example, a classification algorithm. Once trained, the classifier engine 204 may be saved at block 402. The trained classifier may be ready for use by the inference module 108.

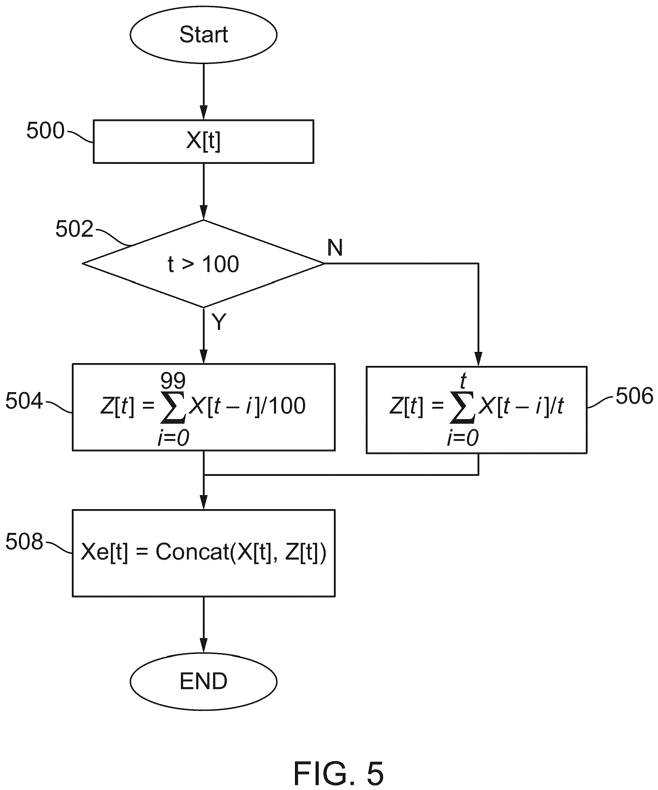

FIG. 5 is a flow diagram of a process executed by the data augmentation module 200 for augmenting the collected trace data X during an inference stage according to one embodiment. In one embodiment, the trace data X is augmented based on statistical information of prior samples. The statistical information may be a mean, standard deviation, moment, or the like. The augmenting of the trace data with statistical information may help provide a temporal context to the input data, such as, for example, information that the data is increasing or decreasing in value over time.

In one embodiment, the process for data augmentation starts, and at block 500, the data augmentation module 200 identifies an original input vector X[t] generated from the collected trace data X.

At block 502, a determination is made as to whether a preset number (e.g. 100) of prior samples may be identified corresponding to the original input vector. If more than the preset number of prior samples may be identified, the data augmentation module 200 determines, in block 504, statistical information of the current and prior samples. The statistical information may be, for example, a mean value Z[t] of the prior samples.

The mean value of the prior samples may be determined using formula 1, as follows:

$$Z[t] = \sum_{i=0}^{99} X[t-i]/100$$

Referring again to block 502, if less than the preset number of prior samples is identified, the statistical information is determined based on the available number of current and prior samples at block 506. The statistical information may again be, for example, a mean value Z[t] of the prior samples.

The mean value of the prior samples may be determined using formula 2, as follows:

$$Z[t] = \sum_{i=0}^{t} X[t-i]/t$$

At block 508, a statistical information vector Xe [t] generated based on the determined statistical information (e.g. a mean value vector) is concatenated to the original input vector. The statistical information may also include standard deviation, median, mode, or the like.

The statistical information vector Xe[t] may be generated using formula 3, as follows:

$$Xe[t] = Concat(X[t], Z[t])$$

In some embodiments, the various modules and engines described above are implemented in one or more processors. The term processor may refer to one or more processors and/or one or more processing cores. The one or more processors may be hosted in a single device or distributed over multiple devices (e.g. over a cloud system). A processor may include, for example, application specific integrated circuits (ASICs), general purpose or special purpose central processing units (CPUs), digital signal processors (DSPs), graphics processing units (GPUs), and programmable logic devices such as field programmable gate arrays (FPGAs). In a processor, as used herein, each function is performed either by hardware configured, i.e., hard-wired, to perform that function, or by more general-purpose hardware, such as a CPU, configured to execute instructions stored in a non-transitory storage medium (e.g. memory). A processor may be fabricated on a single printed circuit board (PCB) or distributed over several interconnected PCBs. A processor may contain other processing circuits; for example, a processing circuit may include two processing circuits, an FPGA and a CPU, interconnected on a PCB.

It will be understood that, although the terms "first", "second", "third", etc., may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed herein could be termed a second element, component, region, layer or section, without departing from the scope of the inventive concept.

The terminology used herein is for the purpose of describing particular embodiments only and is not intended to be limiting of the inventive concept. As used herein, the terms "substantially," "about," and similar terms are used as terms of approximation and not as terms of degree, and are intended to account for the inherent deviations in measured or calculated values that would be recognized by those of ordinary skill in the art.

As used herein, the singular forms "a" and "an" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list. Further, the use of "may" when describing embodiments of the inventive concept refers to "one or more embodiments of the present disclosure". Also, the term "exemplary" is intended to refer to an example or illustration. As used herein, the terms "use," "using," and "used" may be considered synonymous with the terms "utilize," "utilizing," and "utilized," respectively.

It will be understood that when an element or layer is referred to as being "on", "connected to", "coupled to", or "adjacent to" another element or layer, it may be directly on, connected to, coupled to, or adjacent to the other element or layer, or one or more intervening elements or layers may be present. In contrast, when an element or layer is referred to as being "directly on", "directly connected to", "directly coupled to", or "immediately adjacent to" another element or layer, there are no intervening elements or layers present.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

## Claims

1. A processor-implemented method for making predictions relating to products manufactured via a manufacturing process, the method comprising:

   receiving input data;
   making a first prediction based on the input data;
   identifying a first machine learning model from a plurality of machine learning models based on the first prediction;
   making a second prediction based on the input data and the first machine learning model, wherein the second prediction is a prediction of a defect level associated with the products;
   transmitting a signal to adjust the manufacturing of the products based on the second prediction;
   wherein the method further comprises:

      generating the plurality of machine learning models including:

         applying a first baseline machine learning model to a training dataset;
         engaging in an error analysis process in response to applying the first baseline machine learning model, wherein the error analysis process comprises identifying a first portion of the training dataset that is within a threshold range of error, and identifying a second portion of the training dataset that is outside of the threshold range of error;
         labeling the first portion of the training dataset with a first label; and
         engaging in the error analysis process with a new baseline machine learning model for the second portion of the training dataset,

      wherein the first prediction includes a predicted label, the method further comprising:
      training a classifier based on the training dataset and labels generated by the error analysis process, wherein making the first prediction includes applying the classifier to the input data.

2. The method of claim 1, wherein the input data includes multivariate sensor data from a plurality of sensors.

3. The method of claim 1 or claim 2, wherein the first machine learning model is associated with a first normal distribution associated with a first manufacturing condition, and a second machine learning model of the plurality of machine learning models is associated with a second normal distribution associated with a second normal distribution associated with a second manufacturing condition.

4. The method of any preceding claim, wherein the error analysis process is executed a certain number of times based on a preset number of labels.

5. The method of any preceding claim, wherein a different label is assigned in each execution of the error analysis process, to data in the training dataset that is within the threshold range of error.

6. The method of any preceding claim further comprising:
   augmenting the input data with additional data, wherein the additional data is based on statistical information on data generated at a prior time period.

7. The method of any preceding claim, wherein at least one of temperature or operating speed of a manufacturing equipment is adjusted in response to the signal.

8. A system (102) for making predictions relating to products manufactured via a manufacturing process, the system comprising:

   a processor (101); and
   a memory (103), wherein the memory (103) includes instructions that, when executed by the processor (101), cause the processor to perform the method of any preceding claim.

## Patentansprüche

1. Prozessorimplementiertes Verfahren zum Erstellen von Vorhersagen in Bezug auf Produkte, die durch einen Herstellungsprozess hergestellt werden, wobei das Verfahren Folgendes umfasst:

   Empfangen von Eingabedaten;
   Erstellen einer ersten Vorhersage auf der Grundlage der Eingabedaten;
   Identifizieren eines ersten maschinellen Lernmodells aus einer Vielzahl von maschinellen Lernmodellen auf der Grundlage der ersten Vorhersage;
   Erstellen einer zweiten Vorhersage auf der Grundlage der Eingabedaten und des ersten maschinellen Lernmodells, wobei die zweite Vorhersage eine Vorhersage eines Defektniveaus ist, das den Produkten zugeordnet ist;
   Übertragen eines Signals zum Anpassen der Herstellung der Produkte auf der Grundlage der zweiten Vorhersage;
   wobei das Verfahren ferner Folgendes umfasst:
   Erzeugen der Vielzahl von maschinellen Lernmodellen, einschließlich:

Anwenden eines ersten maschinellen Basis-Lernmodells auf einen Trainingsdatensatz;

Durchführen eines Fehleranalyseprozesses als Reaktion auf das Anwenden des ersten maschinellen Basis-Lernmodells, wobei der Fehleranalyseprozess das Identifizieren eines ersten Abschnitts des Trainingsdatensatzes, der innerhalb eines Fehlerschwellenbereichs liegt, und das Identifizieren eines zweiten Abschnitts des Trainingsdatensatzes umfasst, der außerhalb des Fehlerschwellenbereichs liegt;

Kennzeichnen des ersten Abschnitts des Trainingsdatensatzes mit einem ersten Label; und

Durchführen des Fehleranalyseprozesses mit einem neuen maschinellen Basis-Lernmodells für den zweiten Abschnitt des Trainingsdatensatzes,

wobei die erste Vorhersage ein vorhergesagtes Label einschließt, wobei das Verfahren ferner Folgendes umfasst:

Trainieren eines Klassifizierers auf der Grundlage des Trainingsdatensatzes und von durch den Fehleranalyseprozess erzeugten Labels, wobei das Erstellen der ersten Vorhersage das Anwenden des Klassifizierers auf die Eingabedaten einschließt.

2. Verfahren nach Anspruch 1, wobei die Eingabedaten multivariate Sensordaten von einer Vielzahl von Sensoren einschließen.

3. Verfahren nach Anspruch 1 oder Anspruch 2, wobei das erste maschinelle Lernmodell einer ersten Normalverteilung zugeordnet ist, die einer ersten Herstellungsbedingung zugeordnet ist, und ein zweites maschinelles Lernmodell aus der Vielzahl von maschinellen Lernmodellen einer zweiten Normalverteilung zugeordnet ist, die einer zweiten Normalverteilung zugeordnet ist, die einer zweiten Herstellungsbedingung zugeordnet ist.

4. Verfahren nach einem der vorhergehenden Ansprüche, wobei der Fehleranalyseprozess eine bestimmte Anzahl von Malen auf der Grundlage einer vorgegebenen Anzahl von Labeln ausgeführt wird.

5. Verfahren nach einem der vorhergehenden Ansprüche, wobei bei jeder Ausführung des Fehleranalyseprozesses ein anderes Label den Daten im Trainingsdatensatz, die innerhalb des Fehlerschwellenbereichs liegen, zugeordnet wird.

6. Verfahren nach einem der vorhergehenden Ansprüche, ferner Folgendes umfassend:
Anreichern der Eingabedaten mit zusätzlichen Daten, wobei die zusätzlichen Daten auf statistischen Informationen über Daten basieren, die in einem früheren Zeitraum erzeugt wurden.

7. Verfahren nach einem der vorhergehenden Ansprüche, wobei mindestens eine von Temperatur oder Betriebsgeschwindigkeit einer Herstellungsanlage als Reaktion auf das Signal eingestellt wird.

8. System (102) zum Erstellen von Vorhersagen in Bezug auf Produkte, die durch einen Herstellungsprozess hergestellt werden, wobei das System Folgendes umfasst:

einen Prozessor (101); und
einen Speicher (103), wobei der Speicher (103) Anweisungen einschließt, die, wenn sie von dem Prozessor (101) ausgeführt werden, den Prozessor veranlassen, das Verfahren nach einem der vorhergehenden Ansprüche durchzuführen.

**Revendications**

1. Procédé mis en œuvre par processeur pour réaliser des prédictions concernant des produits fabriqués via un processus de fabrication, le procédé comprenant :

la réception de données d'entrée ;
la réalisation d'une première prédiction sur la base des données d'entrée ;
l'identification, sur la base de la première prédiction, d'un premier modèle d'apprentissage automatique parmi une pluralité de modèles d'apprentissage automatique ;
la réalisation d'une deuxième prédiction sur la base des données d'entrée et du premier modèle d'apprentissage automatique, dans lequel la deuxième prédiction est une prédiction d'un niveau de défaut associé aux produits ;
la transmission d'un signal pour ajuster la fabrication des produits, sur la base de la deuxième prédiction ;
dans lequel le procédé comprend en outre :
la génération de la pluralité de modèles d'apprentissage automatique, y inclus :

l'application d'un premier modèle d'apprentissage automatique de base à un ensemble de données d'entraînement ;
le lancement d'un processus d'analyse d'erreurs en réponse à l'application du premier modèle d'apprentissage automatique de base, dans lequel le processus d'analyse d'erreurs comprend l'identification d'une première partie de l'ensemble de données d'entraînement qui se situe dans une plage de seuil d'erreur, et l'identification d'une deuxième partie de l'ensemble de données d'entraînement qui se situe en dehors de la plage de seuil d'erreur ;

l'étiquetage de la première partie de l'ensemble de données d'entraînement avec une première étiquette ; et

le lancement du processus d'analyse d'erreurs avec un nouveau modèle d'apprentissage automatique de base pour la deuxième partie de l'ensemble de données d'entraînement,

dans lequel la première prédiction inclut une étiquette prédite, le procédé comprenant en outre :

l'entraînement d'un classificateur sur la base de l'ensemble de données d'entraînement et des étiquettes générées par le processus d'analyse d'erreurs, dans lequel la réalisation de la première prédiction inclut l'application du classificateur aux données d'entrée.

2. Procédé selon la revendication 1, dans lequel les données d'entrée incluent des données de capteurs multivariées d'une pluralité de capteurs.

3. Procédé selon la revendication 1 ou la revendication 2, dans lequel le premier modèle d'apprentissage automatique est associé à une première distribution normale associée à une première condition de fabrication, et un deuxième modèle d'apprentissage automatique de la pluralité de modèles d'apprentissage automatique est associé à une deuxième distribution normale associée à une deuxième distribution normale associée à une deuxième condition de fabrication.

4. Procédé selon l'une quelconque des revendications précédentes, dans lequel le processus d'analyse d'erreurs est exécuté un certain nombre de fois, sur la base d'un nombre prédéfini d'étiquettes.

5. Procédé selon l'une quelconque des revendications précédentes, dans lequel une étiquette différente est attribuée à chaque exécution du processus d'analyse d'erreurs, aux données de l'ensemble de données d'entraînement qui se situent dans la plage de seuil d'erreur.

6. Procédé selon l'une quelconque des revendications précédentes, comprenant en outre :

l'accroissement des données d'entrée par des données supplémentaires, dans lequel les données supplémentaires se basent sur des informations statistiques sur des données générées lors d'une période antérieure.

7. Procédé selon l'une quelconque des revendications précédentes, dans lequel au moins une parmi la température ou la vitesse de fonctionnement d'un équipement de fabrication est ajustée en réponse au signal.

8. Système (102) pour réaliser des prédictions concernant des produits fabriqués via un processus de fabrication, le système comprenant :

un processeur (101), et
une mémoire (103), dans lequel la mémoire (103) inclut des instructions qui, lorsqu'elles sont exécutées par le processeur (101), amènent le processeur à effectuer le procédé selon l'une quelconque des revendications précédentes.

FIG. 1

EP 3 971 663 B1

FIG. 2

EP 3 971 663 B1

FIG. 3A

Baseline Regressor ~330

(Error within range so generate class 0 label at 312 and train regressor at 314 based on baseline)

(Error greater than range so train first intermediate regressor at 316 based on baseline)

(Error less than range so train second intermediate regressor at 322 based on baseline)

Regressor for class 0 ~332

First Intermediate Regressor ~334

Second Intermediate Regressor ~336

(Error within range so generate class 1 label at 312 and train regressor at 314 based on first intermediate regressor and sample subset)

(Error greater than range so train third intermediate regressor at 316 based on first intermediate regressor and sample subset)

(Error less than range so train fourth intermediate regressor at 322 based on first intermediate regressor and sample subset)

(Error within range so generate class 2 label at 312 and train regressor at 314 based on second intermediate regressor and sample subset)

Regressor for class 1 ~338

Third Intermediate Regressor ~346

Fourth Intermediate Regressor ~348

340~

Regressor for class 2

(Error within range so generate class 3 label at 312 and train regressor at 314 based on third intermediate regressor and subset)

(Error within range so generate class 4 label at 312 and train regressor at 314 based on fouth intermediate regressor and subset)

Regressor for class 3 ~342

Regressor for class 4 ~344

FIG. 3B

EP 3 971 663 B1

314

400                402

X, Label →  Train Classifier  →  Save Classifier

FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020003114 A1

- US 2019304849 A1